# EUROPÄISCHE PATENTSCHRIFT

(11) **EP 1 347 153 B1**
(45) Veröffentlichungstag und Bekanntmachung des Hinweises auf die Patenterteilung: **12.04.2006**
(21) Anmeldenummer: 03013019.9
(22) Anmeldetag: 14.07.1998
(51) Int. Cl.: F01D 11/04, F16J 15/40

(54) **Berührungsloses Abdichten von Spalten Gasturbinen**
Non- contact sealing of gaps in gas turbines
Système d'étanchéité sans contact pour turbines à gaz

(43) Veröffentlichungstag der Anmeldung: 24.09.2003
(62) Teilanmeldung aus: 98810670.4
(73) Patentinhaber: Alstom Technology Ltd, 5400 Baden (CH)
(72) Erfinder: Beeck, Alexander, Dr., Orlando, Florida 32828 (US); Endres, Wilhelm, Dr., 5453 Remetschwil (CH); Vogeler, Konrad, Dr., 01728 Possendorf (DE); Weigand, Berhard, Dr., Filderstadt-Sielmingen (DE)

(56) Entgegenhaltungen:
- CH-A- 529 914
- CH-A- 606 775
- CH-A- 673 140
- DE-A- 1 930 411
- DE-A- 2 942 703
- DE-A- 3 505 491
- DE-A- 19 619 722
- GB-A- 855 040
- US-A- 3 645 544
- US-A- 4 162 077
- US-A- 4 836 148

## Beschreibung

### Technisches Gebiet

Die vorliegende Erfindung betrifft eine Vorrichtung zum berührungslosen Abdichten von Spalten in Strömungsmaschinen, insbesondere in Gasturbinen.

### Stand der Technik

Der konstruktive Aufbau von Strömungsmaschinen bedingt eine Aneinanderreihung von zueinander feststehenden und/oder bewegten Bauteilen. Zwischen diesen Bauteilen verbleiben aus funktionalen Gründen oftmals ein oder mehrere Spalte, die im Strömungskanal der Strömungsmaschine von einem Primärfluidstrom überströmt werden. Hiermit verbunden ist ein Eindringen des Primärfluides in diese Spalte. Speziell im Heißgasteil einer Gasturbine ist ein Eindringen des heißen Primärfluides in Bauteilspalte aufgrund der hohen Temperaturen des Primärfluides, die häufig sogar über den maximal zulässigen Materialtemperaturen liegen, unbedingt zu vermeiden. Dennoch in die Spalte eindringendes, heißes Primärfluid kann als Folge des Wärmeaustauschs mit den an den Spalt angrenzenden Bauteilen somit zu unzulässig hohen Temperaturen dieser Bauteile führen. Dies wiederum stellt die Ursache für Bauteilschäden insbesondere in Form von Bauteilrissen oder einer zumindest deutlichen Verminderung der Lebensdauer dieser Bauteile dar. Darüber hinaus führen Spalte zu Strömungsleckagen der Primärfluidströmung und somit zu Einbußen im Wirkungsgrad von Gasturbinen.

Bisher wurden diese Spalte mit Hilfe mechanischer Dichtungen wie beispielsweise Dichtbleche und Dichtstreifen, Faltenbälge sowie federbelasteten Dichtungen oder auch mit Hilfe von Vorrichtungen zum fluiddynamischen Abdichten gegenüber dem Primärfluid abgedichtet.
Mechanische Dichtungen sind aufgrund ihres berührenden Wirkprinzips einem abrasiven Verschleiß ausgesetzt und weisen infolgedessen eine nur begrenzte Lebensdauer auf.
In den bisher bekannten Vorrichtungen zum fluiddynamischen Abdichten wird es angestrebt, den Spalt mittels einer einfachgerichteten Verdrängungsströmung zu sperren. Diese Verdrängungsströmung dichtet den Spalt gegenüber dem Primärfluid entweder mittels eines aus dem Spalt in die Primärfluidströmung ausgeblasenen, kontinuierlichen Sekundärfluidstroms, wie beispielsweise in CH 529 914 beschrieben, oder eines den Spalt überdeckenden Sekundärfluidfilms ab.

Im ersten Fall wird der Spalt an der der Primärströmung abgewandten Spaltöffnung mit einem Sekundärfluid erhöhten Gegendruckes beaufschlagt. Der höhere Druck des Sekundärfluides erwirkt eine einfach gerichtete Spaltströmung aus dem sekundärfluidseitigen Reservoir in die Primärströmung.
In dem zweiten bekannten Verfahren zum Zwecke fluiddynamischen Abdichtens eines Spaltes wird eine einfach gerichtete Sekundärfluidströmung mit einer Geschwindigkeitskomponente quer zur Spaltlängsrichtung in Form eines den Spalt überdeckenden Sekundärfluidfilms erzeugt. Infolge der Verdrängungswirkung des Sekundärfluides wird hierdurch eine fluidmechanische Trennung des Primärfluides gegenüber einem im Spalt befindlichen Tertiärfluid erzielt. Das Tertiärfluid entstammt hierbei einem Tertiärfluidreservoir und strömt über die der Primärströmung abgewandten Öffnung des Spaltes in den Spalt. Handelt es sich nicht um einen Spalt zwischen zwei Bauteilen sondern um eine Vertiefung in einem Bauteil, so weist diese Vertiefung eine geschlossene Bauteilkontur auf. Somit besteht, sofern keine zusätzliche Vorrichtung, wie beispielsweise ein Zuführkanal, angeordnet ist, keine Verbindung zu einem Reservoir des Tertiärfluides. Das als Totvolumen der Vertiefung auf der der Primärströmung abgewandten Seite der Wirbelströmung verbleibende Volumen der Vertiefung wird im folgenden vereinfachend ebenso als tertiärfluidseitiger Spaltanteil bezeichnet.

Beide Vorrichtungen zum fluiddynamischen Abdichten erfordern jedoch einen vergleichsweise hohen Massendurchsatz des zum Abdichten eingesetzten Sekundärfluides. Bei einer in der Praxis üblichen Verwendung von aus dem Verdichterbereich abgezweigtem Sekundärfluid weisen diese Verfahren zudem insbesondere im Turbineneintrittsbereich eine oftmals nur eingeschränkte Wirksamkeit auf. Als Ursache hierfür kann beispielsweise ein lokaler Aufstau der Strömung vor den Schaufeln des Eintrittsleitrades der Turbine zu einer lokalen Erhöhung des statischen Druckes der Primärfluidströmung führen. Bei einem in der Regel nur geringen Druckverlust der Primärströmung in der Brennkammer kann somit der lokale statische Druck der Primärströmung beim Überströmen eines Spaltes im Turbineneintrittsbereich höher sein als der Druck des unmittelbar vor der Brennkammer entnommenen und der Turbine zugeführten Sekundärfluides. Infolge dieses Druckgefälles kommt es zu einem lokalen Einströmen des heißen Primärfluides in zumindest Teilbereiche des Spaltes.

Thermisch oder mechanisch bedingte Bauteildehnungen und die sich hieraus ergebenden Änderungen der geometrischen Abmessungen der Spalte als auch Verschiebungen der Bauteile zueinander in Spaltlängsrichtung erhöhen die Anforderungen an die eingesetzten Dichtungen erheblich. Thermisch bedingte Änderungen der Bauteilgeometrie treten insbesondere im Heißgasteil einer Gasturbine auf. Als Folge resultieren häufige Fehlfunktionen sowohl mechanischer Dichtungen als auch der Vorrichtungen zum fluiddynamischen Abdichten. Die Lebensdauer der mechanischen Dichtungen wird zudem weiter deutlich reduziert.

In den Patentschriften GB 855 040 und US 3 645 544 werden Dichtvorrichtungen beschrieben, bei denen zur Abdichtung eines Spaltes gegen ein Primärfluid ein Sekundärfluid so in den Spalt zugeführt wird, daß sich in dem Spalt ein Wirbelsystem ausbildet. Die beschriebenen Dichtvorrichtungen sind aber jeweils nur für Spalte zwischen zwei Bauteilen einsetzbar, bei denen die Bauteile relativ zueinander rotieren und sich die Spalte jeweils über den gesamten Umfang erstrecken.

### Darstellung der Erfindung

Der Erfindung liegt also die Aufgabe zugrunde, eine Vorrichtung zum nichtverschleißenden und wirtschaftlichen Abdichten der in Strömungsmaschinen auftretenden Spalte zu entwickeln. Die Spalte können hierbei als Bauteilspalte zwischen Bauteilen auftreten oder auch als spaltförmige Vertiefungen eines Bauteils ausgebildet sein. Die Vorrichtung ist insbesondere auch unter dem Gesichtspunkt eines zuverlässigen Einsatzes im Heißgasteil einer Gasturbine mit sich im Betrieb infolge thermischer und mechanischer Bauteildehnungen ändernden Spaltgeometrien zu entwickeln.

Diese Aufgabe wird in einem ersten Aspekt erfindungsgemäß dadurch gelöst, daß das Sekundärfluid in dem Spalt oder in unmittelbarer Angrenzung an den Spalt, in zumindest einem oder mehreren Teilbereichen längs des Spaltes, eine Wirbelströmung ausbildet. Die Wirbelströmung bildet sich hierbei bevorzugt über die gesamte Spaltbreite aus.
Als wesentlicher Vorteil gegenüber den bisher bekannten fluiddynamischen Verfahren ergibt sich ein verminderter Bedarf an zur Abdichtung des Spaltes erforderlichem Sekundärfluidmassenstrom. Dies ist darin begründet, daß die fluidmechanische Trennung der Primärfluidströmung von dem im tertiärfluidseitigen Spaltanteil befindlichen Tertiärfluid mittels einer vergleichsweise dünnen Wirbelschicht des Sekundärfluides erfolgt. Sekundär- und Tertiärfluid können hierbei grundsätzlich dem gleichen Reservoir entstammen, wobei aber geeignete Druckverhältnisse in der Zuströmung zum Spalt zu berücksichtigen sind. Die gezielte Ausbildung der Wirbelströmung des Sekundärfluides führt zu einem mehrfachen Überströmen des Spaltes eines jeden Sekundärfluidpartikels und somit einer mehrfachen Dichtwirkung. Das Sekundärfluid der Wirbelströmung vermischt sich hierbei nur geringfügig mit dem Primärfluid oder dem Tertiärfluid.

Ein weiterer wesentlicher Vorteil der Wirbelströmung gegenüber den einfach gerichteten Dichtströmungen wurde in der Eigenstabilität des Wirbels gefunden. Auch bei geringen Druckunterschieden des Sekundärfluides zu dem Primärfluid prägt sich die Wirbelströmung stabil aus und stellt somit die Dichtwirkung sicher.
Im Hinblick auf Eigenstabilität und Einfachheit der Strömungsführung zeigte es sich, daß es besonders vorteilhaft ist, das Sekundärfluid so zu führen, daß sich eine um einen Rotationsmittelpunkt oder eine Rotationsachse rotierende Wirbelströmung ausbildet.
Mittels einer geeigneten Anordnung der Zuführung des Sekundärfluides in den primärströmungsseitigen Spaltaustrittsbereich wird diese Rotation der Wirbelströmung durch die auf den Zuführstrom wirkenden Kräften der Primärströmung hervorgerufen.

In einer bevorzugten Ausführung der Erfindung erfolgt die Strömungsführung in einer in dem Spalt in Längs- oder Umfangsrichtung des Spaltes angeordneten Kammer. Ist der Spalt am Umfang einer Bauteilanordnung oder einer rotationssymmetrischen Maschine, beispielsweise einer Gasturbine, angeordnet, so ist die Längsrichtung des Spaltes identisch mit der Umfangsrichtung der Bauteilanordnung oder der Maschine. Zweckmäßigerweise wird im folgenden nur noch auf die Längsrichtung des Spaltes verwiesen. Bedingt durch die Kammerseitenwände wird in der ersten Ausführung der Erfindung eine von der Primärströmung weitgehend unabhängige, in ihrer Lage definierte Wirbelbildung der Sekundärfluidströmung erzeugt. Die kammerbildenden Aussparungen in den Bauteilseitenwänden können hierbei in Bezug auf die spaltbildenden Bauteile symmetrisch oder unsymmetrisch ausgeführt sein. Die Strömungsführung einer rotierenden Wirbelströmung erfolgt vorzugsweise in einer Rotationskammer. Um Totwassergebiete in der Rotationskammer zu vermeiden, sollte die Kammerkontur den äußeren Strömungsvektoren der Wirbelströmung angepaßt, bevorzugt rund oder elliptisch, ausgeformt sein. Im Falle einer in Bezug auf die Bauteilseitenwände symmetrischen Ausformung der Rotationskammer ergeben sich somit in einer Querschnittsbetrachtung der spaltbildenden Bauteile je halbkreisförmige oder halbellipsenförmige Aussparungen in den an den Spalt angrenzenden Bauteilkonturen.
Die Kammer kann als Endloskammer zur Abdichtung eines Endlosspaltes am Umfang einer Bauteilanordnung, insbesondere bei rotationssymmetrischen Maschinen, oder als Kammer mit endlichen Abmessungen ausgebildet sein. Eine endlich bemessene Kammer in einem endlichen Spalt kann sich in Bezug auf die Spaltlänge auch über den Anfang oder das Ende des Spaltes hinaus erstrecken. Ebenso ist auch die Anordnung einer lokalen Kammer in einem endlichen Spalt oder in einem Endlosspalt möglich. Die lokale Kammer erstreckt sich hierbei nur über einen Teilbereich des Spaltes. Eine lokale Kammer in einem Endlosspalt kommt insbesondere dann zum Einsatz, wenn die Abdichtung nur lokal erfolgen soll oder auch eine lokale Verstärkung einer anderweitigen Vorrichtung oder eines anderweitigen Verfahrens zum Abdichten des Spaltes angestrebt ist. In einer Gasturbine ist die Verstärkung herkömmlicher Vorrichtungen zum Abdichten insbesondere in den Bauteilspalten zwischen der Brennkammer und dem ersten Turbinenleitrad mit einem lokal erhöhten statischen Druck der Primärströmung infolge des Aufstaus vor den Turbinenleitschaufeln sinnvoll. In den Bereichen lokal erhöhten statischen Druckes der Primärströmung sind hierzu bevorzugt lokale Kammern in dem Spalt angeordnet.

In einer weiteren Ausführungsform kann die Kammer in Unterkammern unterteilt werden. Diese Unterteilung der Kammer in Unterkammern erfolgt bevorzugt über eine Anordnung von Trennwänden. In Turbomaschinen werden diese Trennwände vorteilhaft radial angeordnet. Für jede Unterkammer läßt sich somit die Intensität der Wirbelströmung beispielsweise durch eine Variation des der Unterkammer zugeführten Sekundärfluidmassenstroms variieren.

Es ist von Vorteil, in dem Spalt oder der Kammer Leitelemente anzuordnen. Hierbei handelt es sich bevorzugt um in Spalttiefenrichtung schräg angeordnete oder gebogene Leitstege. Diese Leitelemente sind an einer Bauteilwandt befestigt. Die auf das Sekundärfluid wirkenden Scher- und Zentrifugalkräfte führen zu einer Wirbelbildung der Strömung des Sekundärfluides.
Vorteilhaft werden solche Leitelemente in Spalten zwischen zueinander ruhenden Bauteilen angeordnet.

Die Wirbelströmung in der in dem Spalt angeordneten Kammer unterteilt sich in Bereiche, in denen die Wirbelströmung durch die Wandkontur geführt wird und Strömungsbereiche ohne Führung der Wirbelströmung. Strömungsbereiche ohne Führung treten bei der Überströmung des Spaltes auf. Fehlströmungen der Wirbelströmung bei der Spaltüberströmung können sich infolge von Druckänderungen des Primärfluides oder des Tertiärfluides als auch infolge thermisch oder mechanisch bedingter Geometrieänderungen des Spaltes, insbesondere Verschiebungen der Bauteile zueinander, ausbilden. Diese Fehlströmungen wiederum können zu einem teilweisen oder sogar gesamten Zusammenbruch der Wirbelströmung des Sekundärfluides führen. Als Folge kommt es zu einem partiellen Eindringen von Primärfluid in die Kammer und im Extremfall sogar zu einem völligen Wegfall der Dichtwirkung der Wirbelströmung.
Um den Strömungsbereich ohne wandseitige Führung zu reduzieren, weisen in einer bevorzugten Ausführung der Kammer eine oder beide spaltbildenden Seitenwände je eine Leitlippe in der Kontur der jeweiligen Seitenwand auf. Entsprechend ihrer Funktion zur Strömungsführung ist es von Vorteil, diese Leitlippen im jeweiligen Wirbelaustrittsbereich der in Drehrichtung der erzeugten Wirbelströmung des Sekundärfluides betrachteten Kammer anzuordnen. Die Leitlippen kragen hierbei in den Spalt hinein. Die kammerinnenseitige Kontur der Leitlippe ist in Fortführung der kammerbildenden Seitenwandkontur in einer bevorzugten Ausführung den äußeren Strömungsvektoren der Wirbelströmung angepaßt ausgeführt.
Eine sich als Fehlströmung ausbildende Divergenz der Wirbelströmung in den nicht wandgeführten Bereichen der Kammer kann zusätzlich über mindestens eine Hinterschneidung in der Kammerkontur berücksichtigt werden. Diese Hinterschneidung der Kammerkontur ist bevorzugt dergestalt ausgeführt, daß die jeweils im Wirbeleintrittsbereich der in Drehrichtung des erzeugten Wirbels betrachteten Kontur der kammerbildenden Seitenwand einen größeren Abstand zum Mittelpunkt der Wirbelströmung aufweist als im Austrittsbereich der in Wirbeldrehrichtung vorangestellten kammerbildenden Seitenwand.
Durch eine besonders bevorzugte Kombination einer Leitlippe mit einer Hinterschneidung des in Wirbeldrehrichtung nachgeordneten Bauteils erfährt die Wirbelströmung bei Überströmen des Spaltes einen einer Sprungschanze ähnlichen Effekt.

Die Zuführung des Sekundärfluides erfolgt über Zuführkanäle, die in den Spalt oder die Kammer einmünden. Die Anordnung der Zuführkanäle ist vorteilhaft so zu wählen, daß das Sekundärfluid in einer wirbelunterstützenden Weise in die Kammer, den Spalt oder die unmittelbare Umgebung des Spaltes eingebracht wird. Die Positionierung der Zuführkanäle am Umfang und in Längsrichtung der Kammer oder des Spaltes sollte hierbei in Abhängigkeit der geometrischen Abmessungen der Kammer oder des Spaltes, der Querschnitte der Zuführkanäle und der zu erzielenden Wirbelintensität gewählt werden. Vorteilhaft wird die Anordnung der Zuführkanäle so gewählt, daß über die verteilte Zuführung des Sekundärfluides der jeweilige Massenstrom- und Impulseintrag des zugeführten Sekundärfluides die Wirbelströmung entlang des abzudichtenden Spaltes aufrechterhält.
Als bevorzugte Anordnung der Zuführkanäle am Umfang der Kammer sind diese in ein oder zwei Reihen angeordnet. Im Falle einer zweireihigen Anordnung ist es vorteilhaft, die Zuführkanäle so zu positionieren, daß die Zuführkanäle jeweils paarweise in einer Kammerquerschnittsebene zu liegen kommen.
Es ist sinnvoll und von Vorteil, die Richtung der Zuführung des Sekundärfluides in den abzudichtenden Bereichen des Spaltes grundsätzlich in wirbelunterstützender Weise zu wählen. Bevorzugt erfolgt die Zuführung des Sekundärfluides in die Randbereiche der Wirbelströmung mit einer auf die Wirbelströmung bezogenen näherungsweise tangentialen Einblaserichtung. Dies führt zu einer optimalen Re-Energetisierung der Wirbelströmung.

Erfolgt die Zuführung des Sekundärfluides senkrecht zur Mittelebene des Spaltes, so bildet sich ein lokaler und stehender Wirbel aus. Im Falle einer Zuführung des Sekundärfluides unter einem in der Draufsichtsbetrachtung von der Senkrechten auf die Mittelebene des Spaltes abweichenden Winkel erhält die Wirbelströmung eine zusätzliche vektorielle Geschwindigkeitskomponente in Spaltlängsrichtung. Die Wirbelströmung pflanzt sich somit längs des Spaltes fort. Als Vorteil dieser Anstellung ist die im Vergleich zur senkrechten Zuführung größere räumliche Erstreckung der Wirbelströmung in Spaltlängsrichtung zu nennen.
Verändert sich der statische Druck der Primärströmung längs des Spaltes, so ist es von Vorteil, zumindest einen Zuführkanal in der Querschnittsebene höchsten statischen Druckes der Primärströmung anzuordnen. Einerseits wird die Wirbelströmung somit in der Ebene höchsten primärfluidseitigen Strömungswiderstandes re-energetisiert, andererseits folgt das zugeführte Sekundärfluid dem Druckgradienten der Primärströmung. Hieraus resultiert eine Unterstützung der Längsbewegung der Wirbelströmung innerhalb des Spaltes.
Die Querschnitte der Zuführkanäle sind prinzipiell beliebig wählbar. Rund ausgeformte Zuführkanäle können in einfacher Weise fertigungstechnisch hergestellt werden, wohingegen schlitzförmig ausgebildete Zuführkanäle eine gezieltere Zuführung des Sekundärfluides in die Wirbelströmung ermöglichen. Die in eine Kammer oder einen Spalt einmündenden Zuführkanäle müssen hierbei untereinander nicht einheitlich ausgeführt sein.
Insbesondere bei langen Spalten oder Endlosspalten ist es zweckmäßig, zumindest einen Wirbelablenker in der Kammer anzuordnen. Dieser Wirbelablenker führt zu einem gezielten und örtlich definierten Zusammenbrechen der Wirbelströmung und einem Ausströmen des Fluides der Wirbelströmung aus der Kammer in die Primärströmung. Dies ist insbesondere deshalb zweckmäßig, um insbesondere auch das Fluid im Zentrum der Wirbelströmung zu erneuern.

Insgesamt ist es sinnvoll und zumeist ausreichend, wenn im Turbinenbereich einer Gasturbine Sekundärfluid Verwendung findet, das zuvor zur Bauteilkühlung in zumeist geschlossenen Kühlkanälen eingesetzt wurde.

Grundsätzlich wird bei jeder Anordnung der Wirbelströmung eine Interaktion des Sekundärfluides mit einerseits dem Primärfluid und andererseits, sofern vorhanden, mit dem Tertiärfluid stattfinden. Die auf die Fluidpartikel wirkenden viskosen Scherkräfte in den Übergangsbereichen der Fluidströmungen führen neben einem dissipativen Impulsverlust zu einem gegenseitigen Fluidaustausch. Diese Interaktion kann in Abhängigkeit der konstruktiven Anordnung der Kammer in dem Spalt als auch der primär- und tertiärströmungsseitigen, geometrischen Spaltöffnungen sowie der Anordnung der Zuführkanäle gezielt beeinflußt werden. Sinnvollerweise sind die abhängigen Parameter so zu wählen, daß das wirbelbildende Fluid sukzessive in die Primärströmung abgeführt wird. Gleichermaßen ist eine kontinuierliche Zuführung von neuem Sekundärfluid in die Wirbelströmung erforderlich. Neben der Zuführung von Sekundärfluid über die Zuführkanäle kann auch ein Ansaugen von Fluid aus dem tertiärfluidseitigen Reservoir in die Wirbelströmung erfolgen.

Zusätzlich zur Wirbelströmung können herkömmliche, mechanische Dichtelemente in dem Spalt angeordnet sein. So kann beispielsweise zur zusätzlichen, mechanischen Abdichtung eines Bauteilspaltes in einer Gasturbine ein in Nuten eingelegter Dichtstreifen angebracht sein. Die Anordnung dieser mechanischen Dichtelemente erfolgt vorzugsweise auf der der Primärfluidströmung abgewandten Seite der Wirbelströmung. Eine Zuführung des Sekundärfluides durch den Spalt selbst kann auch in Kombination mit einem Dichtstreifen erfolgen. In konstruktiv einfacher Weise können zu diesem Zweck in einer bevorzugten Ausführung in dem Dichtstreifen Durchlaßöffnungen vorgesehen werden. Diese Durchlaßöffnungen sind bevorzugt unter geeigneten Winkeln gegenüber der Spaltmittelebene angestellt, so daß das den Dichtstreifen durchströmende Sekundärfluid beim Eintritt in die Kammer bereits einen Vordrall aufweist. Sowohl die Anstellwinkel, die geometrischen Ausformungen als auch die Wiederholhäufigkeit der Durchlaßöffnungen sind vorteilhaft unter dem Gesichtspunkt der Aufrechterhaltung der Wirbelströmung zu wählen.

Ein weiterer Vorteil der rotierenden Wirbelströmung im Rahmen der Verwendung zur Abdichtung eines Spaltes insbesondere im Heißgasteil einer Gasturbine gegenüber bisherigen Vorrichtungen und Verfahren liegt in dem sich als Folge der Rotation einstellenden Temperaturprofil der Wirbelströmung. Bei homogener Fluidzusammensetzung der Wirbelströmung konzentrieren sich die heißen Fluidpartikel im Zentrum der Wirbelströmung, wohingegen kältere Fluidpartikel in die Außenbereiche der Wirbelströmung zentrifugiert werden. Aus diesem physikalischen Effekt ergeben sich im Vergleich zu bisherigen Vorrichtungen und Verfahren zum fluiddynamischen Abdichten des Spaltes unmittelbar zwei Vorteile der Wirbelströmung. Einerseits führt dieser Zentrifugen-Effekt durch die Anhäufung kälteren Fluides in den Außenbereichen des Wirbels mit einer Angrenzung der äußeren Geschwindigkeitsvektoren der Wirbelströmung an die spaltbildenden Bauteile zu einem Wärmeaustausch mit den angrenzenden Bauteilen. Im Heißgasteil einer Gasturbine führt dies in der Regel zu einer Kühlung der betroffenen Bauteile. Andererseits wird in den Spalt, zumeist an den Seitenwandungen des Spaltes, eindringendes und von der Wirbelströmung erfaßtes Fluid der heißen Primärströmung aus den Außenbereichen der Wirbelströmung in das Wirbelzentrum verdrängt. Die sich einstellende Temperatur an den Bauteilwänden entspricht somit maximal einer sich einstellenden Mischtemperatur entsprechend den Fluidanteilen der Wirbelströmung.
Kleine Abmessungen der Kammer oder des die Wirbelströmung einschließenden Spaltquerschnittes wirken sich positiv im Sinne der Wirbelintensität als auch des Wärmeübergangs aus. Die sich einstellenden, hohen Geschwindigkeiten der Wirbelströmung führen gleichzeitig aber auch zu einem hohen, dissipativen Druckverlust der Strömung. Dies wiederum erfordert eine Anordnung der Zuführkanäle in kurzen Abständen zueinander längs des Spaltes oder der Kammer zum Zwecke der Re-Energetisierung der Strömung.
Ein wesentlicher Vorteil der erfindungsgemäßen Strömungsführung des Sekundärfluides zum fluiddynamischen Abdichten eines Spaltes im Vergleich zu mechanischen Dichtungen stellt die Anpassungsfähigkeit der Wirbelströmung im Falle geometrischer Verschiebungen der spaltbildenden Bauteile zueinander dar. Diese Verschiebungen können als Folge mechanischer oder thermischer Bauteildehnungen im Betrieb einer Gasturbine auftreten. Kleine geometrische Abmessungen der Kammer schränken die absolute Anpassungsfähigkeit ein.

### Kurze Beschreibung der Zeichnungen

In den Zeichnungen sind Ausführungsbeispiele der Erfindung dargestellt.

Es zeigen:
- Fig. 1: einen Schnitt durch zwei Bauteile, die einen Spalt bilden, in Anordnung mit einer in einem Querschnitt dargestellten, erfindungsgemäßen Vorrichtung zum Abdichten des Spaltes
- Fig. 2: eine Draufsicht auf den Spalt aus Figur 1 mit erfindungsgemäßer Vorrichtung

- Fig. 3: eine spaltbegrenzende Bauteilwand ausgeführt mit Leitelement und Leitlippe in
a) einer Querschnittsbetrachtung
b) einer Seitenansicht
- Fig. 4: Anordnung einer lokalen Kammer in der Scheibe eines Turbinenrotors
- Fig. 5: die statische Druckverteilung der Primärströmung vor einer Turbinenschaufel und in den angrenzenden Schaufelpassagen in Höhe des Spaltes
- Fig. 6: einen Schnitt durch zwei spaltbildende Bauteile in Anordnung mit einer weiteren Ausführungsform der erfindungsgemäßen Vorrichtung zum Abdichten eines Spaltes in Kombination mit einem Dichtstreifen und einer Hinterschneidung der Kammerkontur
- Fig. 7: Seitenansicht der Ausführung aus Figur 6
- Fig. 8: einen Schnitt durch zwei spaltbildende Bauteile mit einer weiteren Ausführungsform der erfindungsgemäßen Vorrichtung und einer Zuführung des Sekundärfluides über Durchlaßöffnungen im Dichtband
- Fig. 9: einen Schnitt durch zwei spaltbildende Bauteile mit unsymmetrisch ausgeformter Kammer
- Fig. 10: einen Schnitt durch eine Kammer mit einer lokal übertriebenen Hinterschneidung zum Abschälen des Wirbels
- Fig. 11: einen Schnitt durch eine Kammer mit einer Querwand und einer Unterbrechung zum Abschälen des Wirbels
- Fig. 12: einen Schnitt durch eine Kammer mit einem seitlich zugeführten Sekundärfluidkanal zum Abschälen des Wirbels.

### Wege zur Ausführung der Erfindung

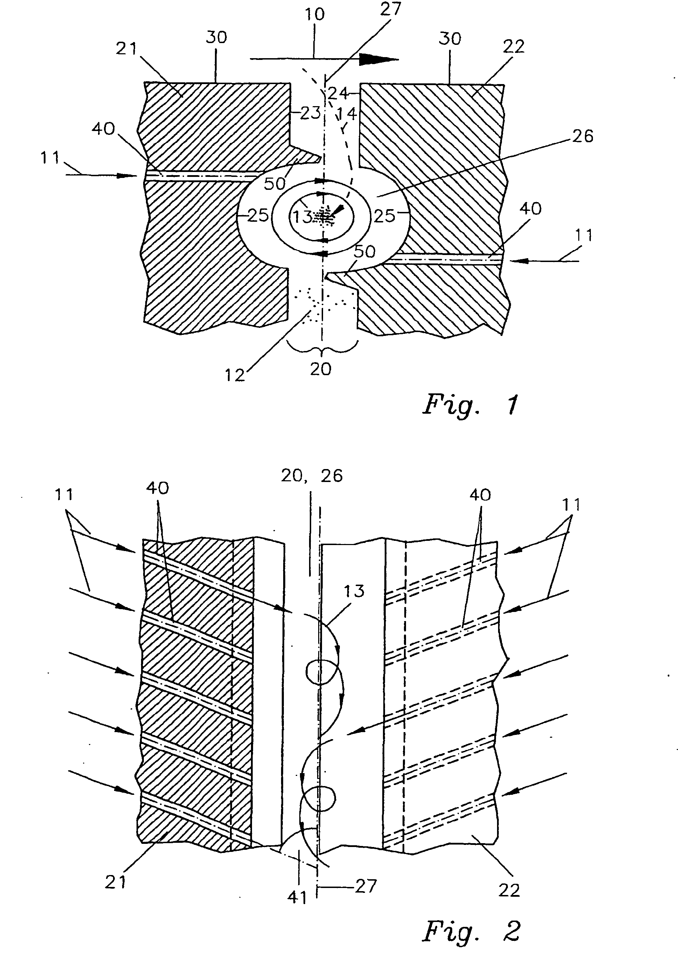

Figur 1 zeigt einen Schnitt durch zwei Bauteile 21 und 22, zwischen denen ein Spalt 20 verbleibt, in Anordnung mit einer erfindungsgemäßen Abdjchtvorrichtung. Die Bauteile 21 und 22 sind zueinander ruhend.

Die Seitenwände 23 und 24 des Spaltes 20 weisen hier je eine halbkreisförmige Aussparung 25 in der Kontur der Bauteile 21 und 22 auf. Die Aussparungen sind in dieser Ausführungsform in einer Tiefe von entsprechend ca. einer Breite des Spaltes 20 in dem Spalt 20 angeordnet. Der Radius der Aussparungen entspricht ca. der halben Breite des Spaltes 20. In der zusammengesetzten Bauteilanordnung bilden diese Aussparungen eine ellipsenförmige Kammer 26. Die Wandkontur der Kammer 26 wird in der dargestellten Vorrichtung jeweils über eine in den Spalt 20 kragende Leitlippe 50 fortgeführt. Diese Leitlippen 50 kragen hier zu ca. 40% der Breite des Spaltes 20 in den Spalt 20 hinein.
In den Bauteilen 21 und 22 sind in dieser Ausführungsform je ein Zuführkanal 40 so angeordnet, daß diese außermittig und senkrecht zur Spaltmittelebene 27 nahe der jeweiligen Leitlippe 50 in die Kammer einmünden. Die Anordnung der Zuführkanäle 40 ist dabei so gewählt, daß die Zuführung des Sekundärfluides 11 in den Außenbereichen der Kammer 26 näherungsweise parallel zur Kammerkontur erfolgt. Die Querschnitte der Zuführkanäle 40 können schlitzartig, ellipsenförmig oder auch rund sein. Letztere Ausführungsform ist fertigungstechnisch in einfacher Weise durch Bohrungen zu realisieren. Die Zuführkanäle 40 liegen in dieser Ausführung jeweils paarweise in einer Querschnittsebene der Kammer 26. Figur 2 zeigt die Anordnung der Zuführkanäle 40 in Längsrichtung des Spaltes 20 in einer Draufsicht. Die Zuführkanäle 40 münden unter einem Anstellwinkel 41 gegenüber der Senkrechten 28 auf die Spaltmittelebene 27 angestellt in die Kammer 26 ein.

Die Bauteilanordnung wird, wie in Figur 1 dargestellt, auf Ihrer Außenseite 30 von einem Primärfluid 10 überströmt. Der Spalt 20 ist mit einem Tertiärfluid 12 aufgefüllt, das durch die freie, der Primärströmung 10 abgewandte Öffnung des Spaltes 20 in den Spalt 20 eindringt. Das über die Zuführkanäle 40 in die Kammer 26 eingebrachte Sekundärfluid 11 bildet eine Wirbelströmung 13 aus. Infolge der Strömungsführung durch die Kammerwandung rotiert die Wirbelströmung 13 um den Mittelachse der Kammer 26. Voraussetzung hierfür ist, daß der Totaldruck des Sekundärfluides 11 zumindest geringfügig über dem statischen Druck des Primärfluides 10 und dem Totaldruck des Tertiärfluides 12 liegt.
Der Geschwindigkeitsvektor des zugeführten Sekundärfluides 11 weist in der Draufsicht nach Figur 2 infolge der Anstellung der Zuführkanäle 40 unter dem Anstellwinkel 41 eine Komponente in Längsrichtung des Spaltes 20 auf. Diese Geschwindigkeitskomponente führt zu einer Vorwärtsbewegung der Wirbelströmung 13 in Längsrichtung der Kammer 26.

Die erzeugte Wirbelströmung 13 führt erfindungsgemäß infolge der Verdrängungswirkung der Wirbelströmung 13 zu einer Separation des Primärfluides 10 von dem Tertiärfluid 12. Dennoch in den Spalt 20 eindringendes Primärfluid 14 wird von der rotierenden Wirbelströmung 13 erfaßt und ebenfalls in Rotation versetzt. Bei homogener oder annähernd homogener Zusammensetzung der Fluide 10, 11, 12 und höheren Temperaturen des Primärfluides 10 im Vergleich zum Sekundärfluid 11 führen die temperaturbedingten Dichteunterschiede der Fluide zu einer Verdrängung der heißeren Strömungsanteile in das Zentrum der rotierenden Wirbelströmung 13. Die eindringende Primärströmung 14 wird somit in der Wirbelströmung 13 gefangen und dringt nicht weiter in den Spalt 20 ein.
In Abhängigkeit der Drücke der Fluide 10, 11, 12 ist ebenso ein Fluidaustausch zwischen der Wirbelströmung 13 und dem Tertiärfluid 12 und auch ein Ausströmen aus der Wirbelströmung 13 in die Primärströmung 10 zu verzeichnen. Diese gegenseitige Interaktion und Vermischung der Fluide 10, 11, 12 wird insbesondere auch durch die geometrische Ausgestaltung der Kammer 26 beeinflußt. Bei geeigneter Wahl der geometrischen Ausgestaltung der Kammer, insbesondere der strömungsführenden Elemente in den Bereichen der Spaltüberströmung der Wirbelströmung 13, stellt sich ein nur geringer Massenstromverlust der Wirbelströmung 13 in die Primärströmung 10 und nahezu keine Fluidströmung in die Spaltbereiche des Tertiärfluides 12 ein. Ein gezieltes Ausströmen von Fluid der Wirbelströmung 13 in die Primärströmung 10 ist zur Erneuerung des Fluides der Wirbelströmung 13 durch neu zugeführtes Sekundärfluid 11 hierbei durchaus erwünscht.
Zwischen den die Wirbelströmung 13 umgebenden Bauteilwänden 25 und den wirbeläußeren, an die Bauteilwandungen angrenzenden Strömungsvektoren der Wirbelströmung 13 findet zusätzlich zur fluiddynamischen Abdichtung des Spaltes 20 ein Wärmeaustausch statt. Dieser Wärmeaustausch führt insbesondere in Turbinen in der Regel zu einer Kühlung der an die Wirbelströmung 13 angrenzenden Bauteile 21, 22 in den Bereichen der Wirbelströmung. Eine Intensivierung des Wärmeübergangs und somit der Kühlung läßt sich über eine Erhöhung der Geschwindigkeiten der Wirbelströmung 13 erzielen. Höhere Geschwindigkeiten wiederum ergeben sich im Falle kleinerer geometrischer Abmessungen der Kammer 26 bei gleichbleibendem Sekundärfluidmassenstrom 11 oder einer Erhöhung des Sekundärfluidmassenstroms 11 bei gleichbleibenden geometrischen Abmessungen der Kammer.

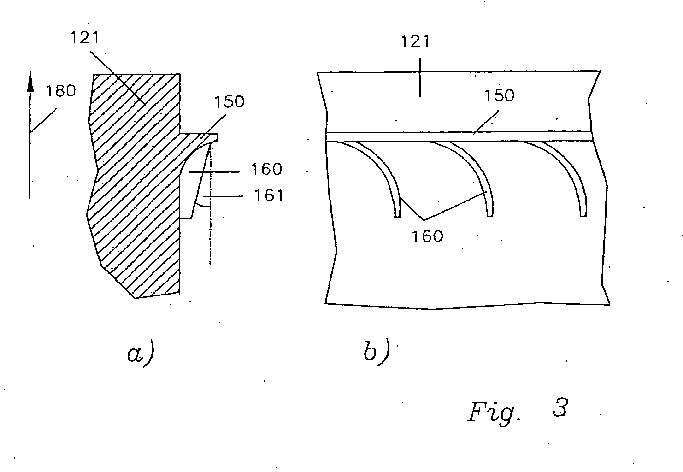

Mittels in radialer Richtung schräg oder gebogen angeordneten Leitelementen, die in der einfachsten Ausführung als Leitsteg realisiert sind, kann der Wirbelströmung eine zusätzliche Geschwindigkeitskomponente in Umfangsrichtung verliehen werden. In Figur 3a und 3b ist ein derartiger Leitsteg 160 an der Bauteilseitenwand des Bauteils 121 befestigt. In Abhängigkeit des Übergangs des Leitelements 160 in die Leitlippe 150 wird der Wirbelströmung ein Geschwindigkeitsvektor in Umfangsrichtung aufgeprägt. Flachere Winkel im Übergang des Leitelements in die Leitlippe führen zu einer höheren Geschwindigkeitskomponente in Umfangsrichtung. Der Verlauf der in den Spalt kragenden Kante weist in radialer Richtung 180 einen Anstellwinkel 161 gegenüber der Spaltmittelebene auf.

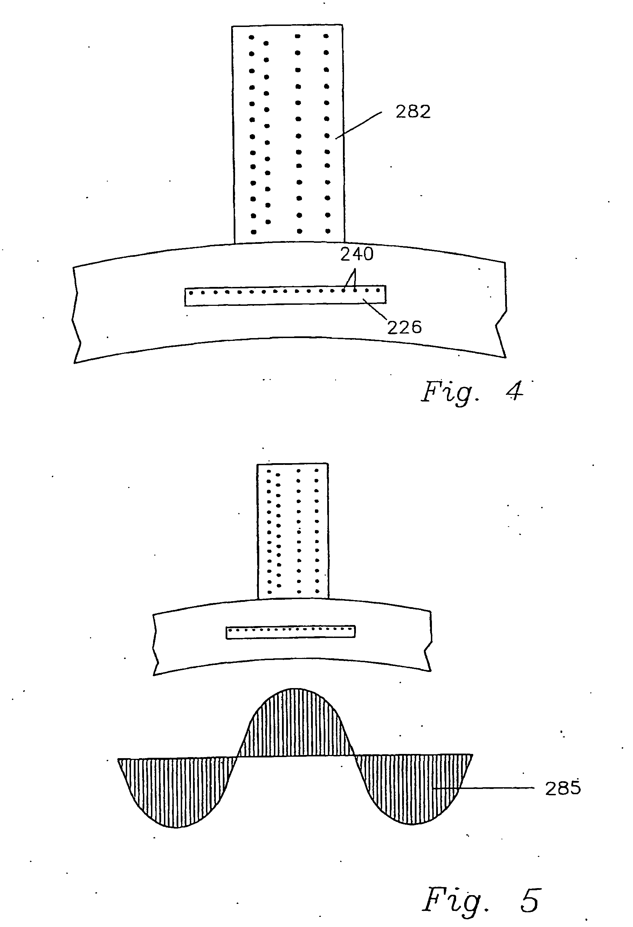

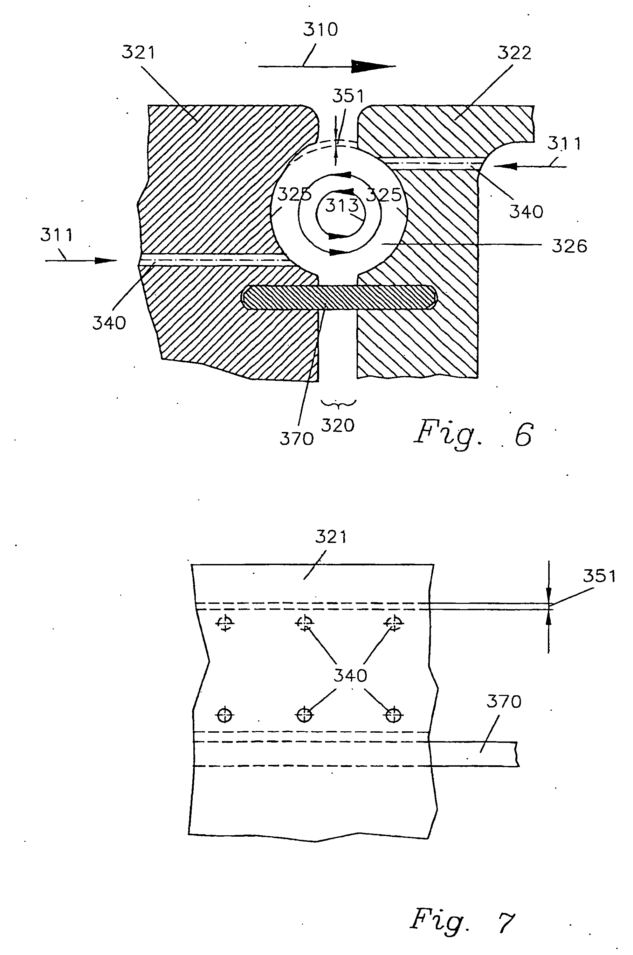

Die die Wirbelströmung führende Kammer kann längs der gesamten Lauflänge des Spaltes ausgebildet sein. Ein am Umfang einer Bauteilanordnung verlaufender Endlos-Spalt weist zur Abdichtung folglich auch eine Endlos-Kammer auf. Im Falle eines endlichen Spaltes kann sich die Kammer auch über die Erstreckung des Spaltes hinaus erstrecken. Ebenso kann eine Kammer aber auch als lokale Kammer in einem Spalt angeordnet sein. Die lokale Kammer erstreckt sich hierbei nur über einen Teilbereich oder einen Abschnitt des Spaltes. In Figur 4 ist eine derartige lokale Kammer 226 in einem Schnitt durch einen Bauteilspalt zwischen einer Brennkammer und einem Turbineneintrittsleitrad einer Gasturbine dargestellt. Die lokale Kammer 226 ist bezogen auf die Schaufelmitte annähernd symmetrisch vor einer Turbinenleitschaufel 282 in Spaltlängsrichtung angeordnet. Die Zuführkanäle 240 der hälftig dargestellten Kammer sind hier in zueinander gleichen Abständen am oberen, der Primärströmung zugewandten Rand der lokalen Kammer 226 eingezeichnet.
Die Anordnung einer oder mehrerer lokaler Kammern in einem Spalt sind insbesondere dann sinnvoll, wenn entweder der Spalt nicht auf seiner gesamten Länge gegen das Primärfluid abzudichten ist, oder wenn das herkömmliche Dichtverfahren in Abschnitten des Spaltes lokal verstärkt werden soll. Dieser Fall tritt insbesondere im Turbineneintrittsbereich einer Gasturbine auf. Infolge des lokalen Aufstaus der Primärströmung in der Anströmung des Schaufelprofils der Eintrittsleitschaufeln, insbesondere im Staupunkt der Schaufel, mit einer Rückwirkung dieses Aufstaus auf die Zuströmung, bildet sich für jede Schaufelpassage ein näherungsweise sinusförmiger Verlauf des statischen Druckes in der Ebene des Bauteilspaltes zwischen Brennkammer und Turbine aus. Eine derartige Verteilung des statischen Druckes 285 vor einer Turbinenleitschaufel ist in Figur 5 dargestellt. Um keine externe Druckluftversorgung erforderlich zu machen, wird Kühl- und Dichtfluid in Gasturbinen üblicherweise dem Primärstrom im Verdichterbereich entnommen. Bei gleichzeitig nur geringem Druckverlust der Primärströmung in der Brennkammer weist das zum Zwecke fluiddynamischen Abdichtens des Bauteilspaltes zwischen Brennkammer und Turbine eingesetzte Dichtfluid oftmals einen nur geringfügig höheren Totaldruck im Vergleich zum mittleren statischen Druck der Primärströmung auf. Tritt infolge eines Aufstaus der Primärfluidströmung eine lokale Erhöhung des statischen Druckes der Primärfluidströmung auf, so kann es bei herkömmlichen Dichtverfahren in Teilbereichen des Spaltes zu einer nicht mehr ausreichenden Abdichtung des Spaltes infolge zu geringen Gegendruckes des Dichtfluides kommen. Insbesondere in diesem Anwendungsfall führt eine in einer lokalen Kammer ausgebildete Wirbelströmung zu einer auch im Falle kleiner Druckunterschiede funktionssicheren Abdichtung des Spaltes.

Figur 6 zeigt eine der in Figur 1 dargestellten Ausführung ähnliche Ausführungsform der Kammer. Die Kammerkontur 325 ist je hälftig in beide Bauteile 321 und 322 eingearbeitet. In der in Figur 6 dargestellten Ausführungsform entfallen die in Figur 1 enthaltenen Leitlippen 50. Stattdessen weist die Kammer in Figur 6 eine Hinterschneidung 351 der Bauteilkonturen im Bereich des der Primärströmung zugewandten Spaltübertritts auf. Zusätzlich ist die Kante im Übergang der Kammerkontur in den Spalt im Bereich der Hinterschneidung abgerundet, während entsprechende Kanten an Leitlippen oder auch im Austrittsbereich der Wirbelströmung aus einer Kammerhälfte als Abreißkanten der Strömung scharfkantig ausgeführt sind. Figur 7 zeigt die Hinterschneidung 351 in einer Seitenansicht des Bauteils 321. Diese Hinterschneidung 351 dient dazu, daß aus der Kammerkontur 325 des Bauteils 322 austretendes Fluid der Wirbelströmung 313 nach Überströmen des Spaltes auch bei gewisser Divergenz der Strömungsvektoren wieder in die Kammerkontur 325 des Bauteils 321 einmündet. Darüber hinaus läßt sich durch die Hinterschneidung 351 eine weitgehend stoßfreie Führung der Wirbelströmung 313 auch im Falle thermisch oder mechanisch bedingter, gegenseitiger Verschiebung der Bauteile 321 und 322 in Spalttiefenrichtung sicherstellen. Diese Toleranz der Kammerkontur in Bezug auf Verschiebung der Bauteile zueinander unter Vermeidung stolperstellenähnlicher Versetzungen in der strömungsführenden Wandkontur der Kammer ist hierbei beschränkt auf die Abmessung der Hinterschneidung 351 in Spalttiefenrichtung. Im Falle einer zu großen Überschneidung 351 saugt die Wirbelströmung 313 Primärfluid 310 an.

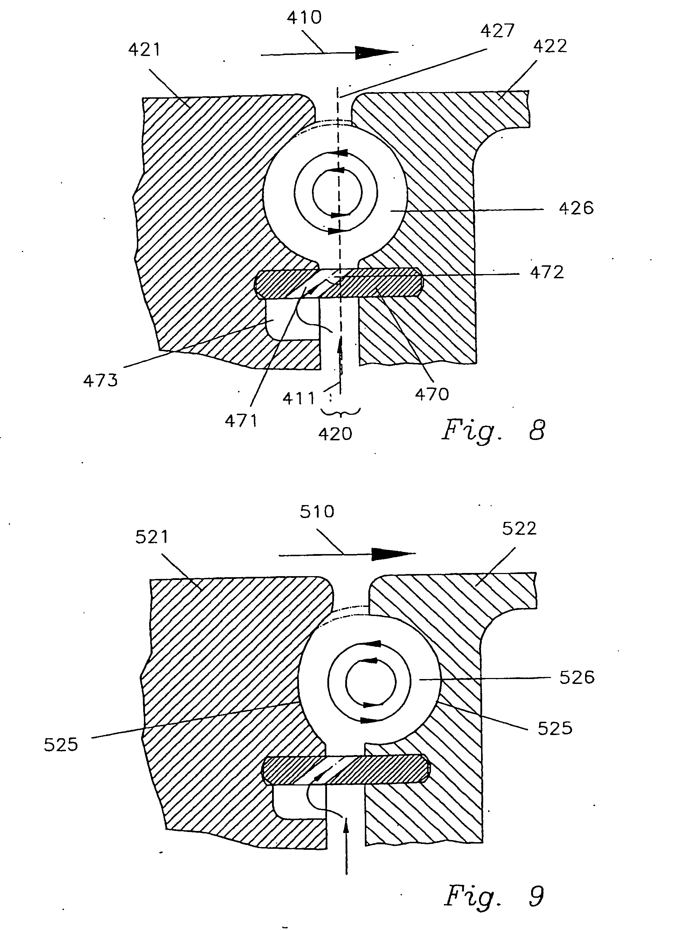

In Ergänzung der Kammer 326 ist in Figur 6 eine mechanische Dichtung auf der der Primärströmung 310 abgewandten Seite der Kammer 326 angeordnet. Diese mechanische Dichtung besteht aus einem in Nuten eingelegten Dichtband 370.
Darüberhinaus sind in dem in Figur 8 dargestellten Dichtband 470 Durchlaßöffnungen 471 vorgesehen. Diese Durchlaßöffnungen 471 ermöglichen eine Zuführung des Sekundärfluides 411 zur Kammer 426 durch den Spalt 420. Die Durchlaßöffnungen 471 sind in einer fertigungstechnisch einfachsten Ausführungsform als über die Länge des Dichtbandes verteilte Bohrungen mit rundem Querschnitt realisiert. In weiteren Ausführungen können sie auch mit ellipsenförmigem oder schlitzförmigem Querschnitt ausgeführt sein. Das Einströmen des Sekundärfluides 411 in die Kammer 426 erfolgt hierbei unter einem Anstellwinkel 472 entsprechend der Neigung der Durchlaßöffnungen 471 gegen die Spaltmittelebene 427. Um ein einwandfreies Einströmen des Sekundärfluides 411 aus dem Spalt 420 in die schräg angestellten Durchlaßöffnungen 471 sicherzustellen, wurde in der in Figur 8 dargestellten Ausführung zusätzlich konstruktiv eine Versorgungstasche 473 vorgesehen.

Grundsätzlich kann die Kammer auch aus zueinander unsymmetrischen Aussparungen in den Konturen der spaltbildenden Bauteilseitenwände gebildet sein. Figur 9 zeigt eine derartige Kammer 526 mit unsymmetrischer Bauteilkontur.

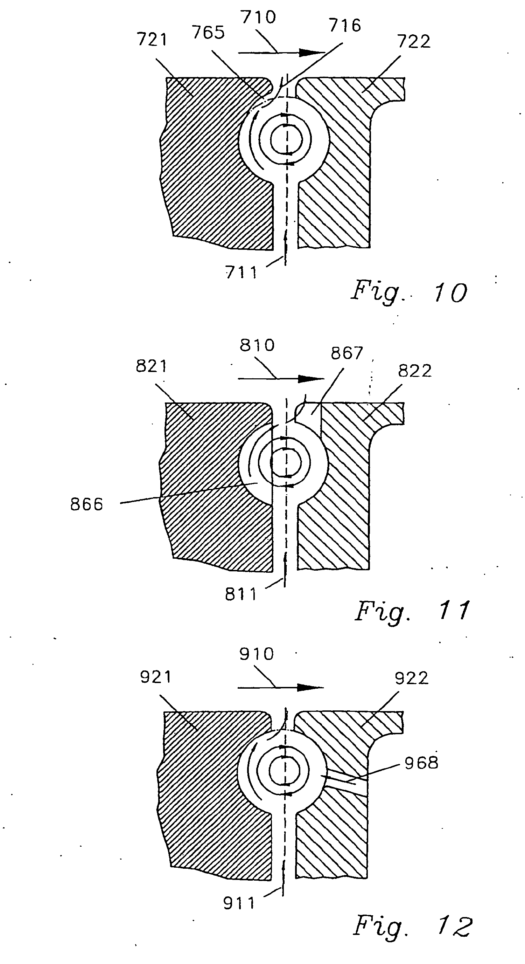

In den Figuren 10, 11 und 12 sind Kammern dargestellt, die zusätzlich Wirbelablenker aufweisen. Diese Wirbelablenker dienen dazu, die Wirbelstruktur lokal zu stören und somit ein Ausfließen des Fluides der Wirbelströmung in die Primärströmung zu verursachen. Die Wirbelablenker sind in den Figuren 10 bis 12 verschieden ausgeführt. Figur 10 zeigt eine lokal übertriebene Hinterschneidung 765 der Kammer in der Funktion eines Wirbelablenkers. Die Hinterschneidung 765 ist in Wirbeldrehrichtung vor dem Spaltübertritt der Wirbelströmung angeordnet. Wirbeläußeres Fluid wird infolge des kleineren Kammerradius nach dem Spaltübertritt in die Primärströmung 710 abgelenkt. In Fig. 11 ist in dem ersten spaltbildenden Bauteil eine Querwand 866 in der Kammer als Wirbelablenker angeordnet. Die Querwand 866 verhindert ein Fortschreiten der Strömung in Längsrichtung der Kammer. Hierdurch kommt es, sofern die Wirbelströmung eine Geschwindigkeitskomponente in Spaltlängsrichtung aufweist, zu einem lokalen Aufstau der Wirbelströmung innerhalb der Kammer. Dies führt zu einem lokalen Ausströmen des Fluides der Wirbelströmung aus der Kammer in die Primärströmung 810. Dieses Ausströmen wird unterstützt durch eine Aussparung 867 in dem zweiten spaltbildenden Bauteil. Diese Aussparung 867 ist zwischen der Kammer und der Strömung des Primärfluides 810 angeordnet und führt somit zu einer lokalen Vergrößerung des Spaltes. Die Aussparung 867 oder die Querwand 866 können auch jeweils alleine ausgeführt sein. Figur 12 zeigt eine Anordnung eines weiteren Zuführkanals. Das in dem weiteren, nur lokal angeordneten Zuführkanal zugeführte Sekundärfluid 968 führt lokal zu einer aerodynamischen Störung der Wirbelströmung. Infolge dieser Störung der Wirbelströmung kommt es ebenso zu einem Ausströmen von Fluid der Wirbelströmung in die Primärströmung 910.

### Bezugszeichenliste

- 10,310,410,510,710,:
- 810,910: Primärfluid
- 11,311,411,711,811,:
- 911: Sekundärfluid
- 12: Tertiärfluid
- 13,313,: Wirbelströmung
- 14: in den Spalt eindringendes Primärfluid
- 716: aus der Kammer ausströmendes Fluid
- 20,120,320,420: Spalt
- 21,121,321,421,521,721,:
- 821,921: erstes spaltbildendes Bauteil
- 22,322,422,522,722,:
- 822,922: zweites spaltbildendes Bauteil
- 23: spaltbildende Seitenwand des ersten Bauteils
- 24: spaltbildende Seitenwand des zweiten Bauteils
- 25,325,525: Aussparung in der Kontur einer Bauteilseitenwand
- 26,226,326,426,526: Kammer (226: lokale Kammer)
- 27,427,: Spaltmittelebene oder Längsachse des Spaltes
- 28: Senkrechte auf die Spaltmittelebene
- 30: der Primärfluidströmung zugewandte Außenseite eines Bauteils
- 40,240,340: Zuführkanal
- 41: Anstellwinkel des Zuführkanals gegenüber der Senkrechten auf die Spaltmittelebene
- 50,150: Leitlippe
- 351: Hinterschneidung der Bauteilkonturen
- 160: Leitelemente
- 161: Anstellwinkel der in den Spalt kragenden Kante des Leitelements
- 765: Hinterschneidung als Wirbelablenker
- 866: Querwand
- 867: Aussparung
- 968: Zuführkanal zur Zuführung von wirbelstörendem Sekundärfluid
- 370,470: Dichtstreifen
- 471: Durchlaßöffnung in dem Dichtstreifen
- 472: Anstellwinkel der Durchlaßöffnung gegenüber der Spaltmittelebene
- 473: Versorgungstasche
- 180: radiale Richtung
- 282: Turbinenleitschaufel
- 285: Verlauf des statischen Druckes vor einer Turbinenleitschaufel

## Patentansprüche

1. Vorrichtung zum Abdichten eines Spaltes mittels eines Sekundärfluides gegen ein Primärfluid,
wobei der Spalt zwischen einem ersten Bauteil und einem zweiten Bauteil angeordnet ist, und
wobei durch eine Strömung des Sekundärfluids in dem Spalt (20,320,420) oder in unmittelbarer Angrenzung an den Spalt in zumindest einem oder mehreren Teilbereichen längs des Spaltes eine Wirbelströmung (13,313) ausbildbar ist, und wahlweise in dem Spalt in Längsrichtung des Spaltes eine Kammer (26,226,326,426,526) angeordnet ist, **dadurch gekennzeichnet, dass**
das erste Bauteil und das zweite Bauteil zueinander ruhen und
die Vorrichtung weiterhin Zuführkanäle (40,240,340) aufweist, die in den Spalt und/oder die Kammer einmünden, wobei
die Zuführkanäle in der ebenen Draufsichtsbetrachtung des Spaltes bezogen auf die. Längsachse (27,427) des Spaltes oder der Kammer unter einem Winkel (41) angestellt in den Spalt oder die Kammer einmünden.

2. Vorrichtung nach Anspruch 1,
**dadurch gekennzeichnet, daß**
die Kammer als Rotationskammer mit einem kreisförmigen oder ellipsenförmigen Querschnitt ausgebildet ist.

3. Vorrichtung nach einem der vorstehenden Ansprüche,
**dadurch gekennzeichnet, daß**
die Zuführkanäle bevorzugt in den Randbereichen der Wirbelströmung in den Spalt oder die Kammer einmünden mit einer bezogen auf die Wirbelströmung näherungsweise tangentialen Einblaserichtung.

4. Vorrichtung nach einem der vorstehenden Ansprüche,
**dadurch gekennzeichnet, daß**
zumindest einer der Zuführkanäle in genau der Querschnittsebene des Spaltes angeordnet ist, in der die Primärfluidströmung den höchsten statischen Druck aufweist.

5. Vorrichtung nach einem der vorstehenden Ansprüche,
weiterhin aufweisend
in dem Spalt oder in der Kammer angeordnete Leitelemente (160), bevorzugt in Spalttiefenrichtung schräg angeordnete oder gebogene Leitstege.

6. Vorrichtung nach einem der vorstehenden Ansprüche,
**dadurch gekennzeichnet, daß**
die Kammer zumindest eine in den Spalt kragende Leitlippe (50,150) aufweist.

7. Vorrichtung nach einem der vorstehenden Ansprüche,
**dadurch gekennzeichnet, daß**
die Kammer zumindest eine Hinterschneidung (351) aufweist.

8. Vorrichtung nach einem der vorstehenden Ansprüche,
**dadurch gekennzeichnet, daß**
die Kammer als Endlos-Kammer am Umfang einer Bauteilanordnung ausgeführt ist

9. Vorrichtung nach einem der Ansprüche 1 bis 7,
**dadurch gekennzeichnet, daß**
die Kammer als lokale Kammer ausgeführt ist.

10. Vorrichtung nach einem der vorstehenden Ansprüche,
**dadurch gekennzeichnet, daß**
die Kammer durch Trennwände in Unterkammern unterteilt ist.

11. Vorrichtung nach einem der vorstehenden Ansprüche,
**dadurch gekennzeichnet, daß**
der Spalt mittels eines Dichtstreifens (370,470) mechanisch abgedichtet ist.

12. Vorrichtung nach Anspruch 11,
**dadurch gekennzeichnet, daß**
der Dichtstreifen Durchlaßöffnungen (471) aufweist, die gegenüber der Spaltmittelebene angestellt sind.

13. Vorrichtung nach einem der vorstehenden Ansprüche,
**dadurch gekennzeichnet, daß**
die Kammer zumindest einen Wirbelablenker (765, 866, 867, 968) aufweist.

## Claims

1. Arrangement for sealing a gap against a primary fluid by means of a secondary fluid, the gap being arranged between a first component and a second component, and it being possible for a flow of the secondary fluid to form a vortex flow (13, 313) in the gap (20, 320, 420) or directly adjacent to the gap in at least one or more sections along the gap, and a chamber (26, 226, 326, 426, 526) being optionally arranged in the gap in the longitudinal direction of the gap, **characterized in that** the first component and the second component are stationary relative to one another and the arrangement also has supply conduits (40, 240, 340), which lead into the gap and/or the chamber, the supply conduits, as seen two-dimensionally in the plan view of the gap, leading into the gap or the chamber at an angle of incidence (41) relative to the longitudinal axis (27, 427) of the gap or the chamber.

2. Arrangement according to Claim 1, **characterized in that** the chamber is designed as a rotary chamber having a circular or elliptical cross section.

3. Arrangement according to one of the preceding claims, **characterized in that** the supply conduits preferably lead into the gap or the chamber in the marginal regions of the vortex flow with an injection direction which is approximately tangential relative to the vortex flow.

4. Arrangement according to one of the preceding claims, **characterized in that** at least one of the supply conduits is arranged in precisely that cross-sectional plane of the gap in which the primary-fluid flow has the highest static pressure.

5. Arrangement according to one of the preceding claims, also having guiding elements (160) arranged in the gap or in the chamber, preferably guiding webs inclined or curved in the depth direction of the gap.

6. Arrangement according to one of the preceding claims, **characterized in that** the chamber has at least one guiding lip (50, 150) jutting out into the gap.

7. Arrangement according to one of the preceding claims, **characterized in that** the chamber has at least one undercut (351).

8. Arrangement according to one of the preceding claims, **characterized in that** the chamber is designed as an endless chamber at the periphery of a component configuration.

9. Arrangement according to one of Claims 1 to 7, **characterized in that** the chamber is designed as a local chamber.

10. Arrangement according to one of the preceding claims, **characterized in that** the chamber is subdivided into subchambers by dividing walls.

11. Arrangement according to one of the preceding claims, **characterized in that** the gap is mechanically sealed by means of a seal strip (370, 470).

12. Arrangement according to Claim 11, **characterized in that** the seal strip has openings (471), which are set at an angle of incidence relative to the gap center plane.

13. Arrangement according to one of the preceding claims, **characterized in that** the chamber has at least one vortex diffuser (765, 866, 867, 968).

## Revendications

1. Dispositif pour étanchéifier une fente au moyen d'un fluide secondaire contre un fluide primaire, la fente étant disposée entre un premier composant et un deuxième composant et
un écoulement tourbillonnaire (13, 313) pouvant être créé par un écoulement du fluide secondaire dans la fente (20, 320, 420) ou à proximité immédiate de la fente dans au moins une ou plusieurs zones partielles le long de la fente, et une chambre (26, 226, 326, 426, 526) étant disposée de manière sélective dans la fente dans la direction longitudinale de la fente,
**caractérisé en ce que**
le premier composant et le deuxième composant sont mutuellement en contact et
le dispositif présente en outre des canaux d'alimentation (40, 240, 340), qui débouchent dans la fente et/ou dans la chambre,
les canaux d'alimentation débouchant dans la fente ou dans la chambre de manière inclinée suivant un certain angle (41) vu dans une vue de dessus en plan de la fente par rapport à l'axe longitudinal (27, 427) de la fente ou de la chambre.

2. Dispositif selon la revendication 1,
**caractérisé en ce que**
la chambre est réalisée sous forme de chambre rotative avec une section transversale circulaire ou en forme d'ellipse.

3. Dispositif selon l'une quelconque des revendications précédentes,
**caractérisé en ce que**
les canaux d'alimentation débouchent de préférence dans les zones marginales de l'écoulement tourbillonnaire dans la fente ou dans la chambre, avec une direction de soufflage approximativement tangentielle par rapport à l'écoulement tourbillonnaire.

4. Dispositif selon l'une quelconque des revendications précédentes,
**caractérisé en ce qu'**au
moins l'un des canaux d'alimentation est disposé exactement dans le plan en section transversale de la fente dans lequel l'écoulement du fluide primaire présente la plus grande pression statique.

5. Dispositif selon l'une quelconque des revendications précédentes,
présentant en outre
des éléments conducteurs (160) disposés dans la fente ou dans la chambre, de préférence des ailettes conductrices cintrées ou disposées obliquement dans la direction de la profondeur de la fente.

6. Dispositif selon l'une quelconque des revendications précédentes,
**caractérisé en ce que**
la chambre présente au moins une lèvre conductrice (50, 150) saillant dans la fente.

7. Dispositif selon l'une quelconque des revendications précédentes,
**caractérisé en ce que**
la chambre présente au moins une contre-dépouille (351).

8. Dispositif selon l'une quelconque des revendications précédentes,
**caractérisé en ce que**
la chambre est réalisée sous la forme d'une chambre sans fin sur la périphérie de l'agencement de composants.

9. Dispositif selon l'une quelconque des revendications 1 à 7,
**caractérisé en ce que**
la chambre est réalisée sous la forme d'une chambre locale.

10. Dispositif selon l'une quelconque des revendications précédentes,
**caractérisé en ce que**
la chambre est divisée par des parois de séparation en sous-chambres.

11. Dispositif selon l'une quelconque des revendications précédentes,
**caractérisé en ce que**
la fente est étanchéifiée mécaniquement au moyen d'un ruban d'étanchéité (370, 470).

12. Dispositif selon la revendication 11,
**caractérisé en ce que**
le ruban d'étanchéité présente des ouvertures de passage (471) qui sont inclinées par rapport au plan médian de la fente.

13. Dispositif selon l'une quelconque des revendications précédentes,
**caractérisé en ce que**
la chambre présente au moins un dispositif de déviation de tourbillon (765, 866, 867, 968).
